# EUROPEAN PATENT APPLICATION

(11) **EP 4 589 417 A1**
(43) Date of publication of application: **23.07.2025**
(21) Application number: 25152672.9
(22) Date of filing: 17.01.2025
(51) Int. Cl.: G06F 3/12, B41J 35/36, B41J 32/00

(54) **IMAGE FORMING APPARATUS**

(30) Priority: 22.01.2024 JP 2024007359
(71) Applicant: Toshiba TEC Kabushiki Kaisha, Tokyo 141-8562 (JP)
(72) Inventor: Kawasaki, Yuki, Tokyo, 141-8562 (JP); Kato, Masakazu, Tokyo, 141-8562 (JP); Oishi, Sadatoshi, Tokyo, 141-8562 (JP)
(74) Representative: Bandpay & Greuter

(57) **Abstract**

An image forming apparatus includes a reader and a controller. The reader reads, from a tag of an ink ribbon, a unique identifier, a digital certificate, and ribbon length information indicating a length of a ribbon. The controller verifies the digital certificate based on the unique identifier. The controller determines a cumulative ink ribbon usage amount of the ink ribbon corresponding to the unique identifier. The controller prohibits printing in response a determination that at least one of (a) the digital certificate is verified to be incorrect or (b) the cumulative ribbon usage amount is equal to or greater than the ribbon length information.

## Description

### FIELD

Embodiments described herein relate generally to an image forming apparatus.

### BACKGROUND

An image forming apparatus that determines whether a supplied consumable is a genuine product is known.

### DISCLOSURE OF INVENTION

There is provided an image forming apparatus comprising a reader configured to read, from a tag of a consumable item, a unique identifier, a digital certificate, and consumable amount information indicating an amount of a consumable contained in the consumable item; and a controller configured to: verify the digital certificate based on the unique identifier; determine a cumulative usage amount of the consumable item corresponding to the unique identifier; and prohibit printing in response to a determination that at least one of (a) the digital certificate is verified to be incorrect or (b) the cumulative usage amount is equal to or greater than the amount of the consumable contained in the consumable item.

In some embodiments, the consumable item is at least one of an ink ribbon containing a ribbon, a toner cartridge containing toner, or an ink cartridge containing ink.

In some embodiments, the controller is configured to prohibit the printing in response to a determination that the digital certificate is verified to be incorrect.

In some embodiments, the image forming apparatus further comprises a printer configured to form an image using the consumable item, wherein the controller is configured to prohibit use of the printer in response to the determination that at least one of (a) the digital certificate is verified to be incorrect or (b) the cumulative usage amount is equal to or greater than the amount of the consumable contained in the consumable item.

In some embodiments, the consumable item is an ink ribbon, and the consumable amount information is ribbon length information indicating a length of a ribbon.

In some embodiments, the controller is configured to prohibit the printing in response to a determination that the cumulative ribbon usage amount is equal to or greater than the ribbon length information.

In some embodiments, the image forming apparatus further comprises: a memory configured to store the cumulative ribbon usage amount in association with the unique identifier, wherein the controller is configured to acquire the cumulative ribbon usage amount from the memory.

In some embodiments, the image forming apparatus further comprises: a communication interface configured to communicate with a server, wherein the controller is configured to: transmit the unique identifier to the server through the communication interface; and receive the cumulative ribbon usage amount from the server through the communication interface.

In some embodiments, the controller is configured to acquire the cumulative ribbon usage amount from the tag.

In some embodiments, the controller is configured to verify the digital certificate by comparing (a) information obtained by hashing the unique identifier with (b) information obtained by decrypting the digital certificate.

In some embodiments, the tag is an integrated circuit tag, and wherein the reader is configured to communicate wirelessly with the integrated circuit tag to read the unique identifier.

In some embodiments, the digital certificate is based on the unique identifier.

In some embodiments, the cumulative ribbon usage amount of the ink ribbon corresponding to the unique identifier includes a usage amount of the ink ribbon in a second image forming apparatus.

There is also provided a method of authenticating an ink ribbon of an image forming apparatus, the method comprising: controlling a sensor to read an integrated circuit tag of the ink ribbon and retrieve a unique identifier, a digital certificate, and ribbon length information indicating a length of a ribbon; verifying the digital certificate based on the unique identifier; determining a cumulative ribbon usage amount of the ink ribbon corresponding to the unique identifier; and prohibiting printing in response to at least one of (a) a determination that the digital certificate is verified to be incorrect or (b) a determination that the cumulative ribbon usage amount is equal to or greater than the ribbon length information.

In some embodiments, determining the cumulative ribbon usage amount of the ink ribbon corresponding to the unique identifier includes receiving the cumulative ribbon usage amount from at least one of (a) a server or (b) the integrated circuit tag.

### DESCRIPTION OF THE DRAWINGS

FIG. 1 is a block diagram showing a configuration example of a printing system according to a first embodiment.
FIG. 2 is a block diagram showing a configuration example of a server.
FIG. 3 is a block diagram showing a configuration example of a recording apparatus.
FIG. 4 is a block diagram showing a configuration example of an image forming apparatus.
FIG. 5 is a flowchart showing an example of recording processing of the recording apparatus.
FIG. 6 is a flowchart showing an example of an operation of the image forming apparatus.
FIG. 7 is a flowchart showing an example of printing processing of the image forming apparatus.

### DETAILED DESCRIPTION

In general, according to one embodiment, an image forming apparatus that prevents use of a consumable item that is not a genuine product is provided.

An image forming apparatus according to an embodiment includes a reader and a controller. The reader reads, from a tag of an ink ribbon, a unique identifier, a digital certificate, and ribbon length information indicating a length of a ribbon. The controller verifies the digital certificate based on the unique identifier. The controller determines a cumulative ink ribbon usage amount of the ink ribbon corresponding to the unique identifier. The controller prohibits printing in response a determination that at least one of (a) the digital certificate is verified to be incorrect or (b) the cumulative ribbon usage amount is equal to or greater than the ribbon length information.

Hereinafter, an embodiment will be described with reference to the drawings. In the description, components having substantially the same function and configuration are denoted by the same reference numerals. The following embodiment illustrates technical ideas. The embodiment does not specify a material, a shape, a structure, an arrangement, or the like of the components. The embodiment can be modified in various ways.

### First Embodiment

### Configuration

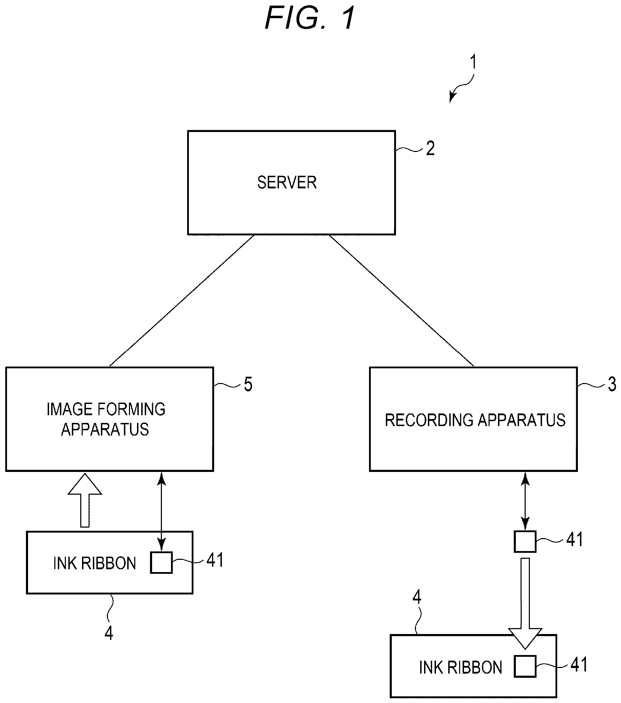

FIG. 1 is a block diagram showing a configuration example of a printing system according to a first embodiment. A printing system 1 is a system that checks whether an ink ribbon used in printing is a genuine product (e.g., authenticates the ink ribbon), and prohibits printing when the ink ribbon is not a genuine product. The printing system 1 includes a server 2, a recording apparatus 3, ink ribbons 4, and an image forming apparatus 5.

The ink ribbon 4 is a consumable item to be used when the image forming apparatus 5 performs printing. The ink ribbon 4 includes a ribbon used for printing and an integrated circuit (IC) tag, shown as IC tag 41. The IC tag 41 is an element, such as an RFID tag, that enables short-distance wireless communication and that can store data in a non-volatile manner. The IC tag 41 stores a unique ID (e.g., unique identification data, a unique identification, a unique identifier, a unique identification number, etc.) which is unique information for each individual (e.g., each IC tag 41 stores a unique ID corresponding to the ink ribbon 4 containing the IC tag 41). The unique ID is stored so as not to be rewritten (e.g., non-rewriteable, unalterable, static, fixed, etc.).

The server 2 is connected to each of the recording apparatus 3 and the image forming apparatus 5. The server 2 transmits information to each of the recording apparatus 3 and the image forming apparatus 5. Specifically, for example, the server 2 transmits a secret key used for encryption to the recording apparatus 3. For example, the server 2 transmits, to the image forming apparatus 5, a public key used for decryption, which is paired with the secret key transmitted to the recording apparatus 3.

The recording apparatus 3 (e.g., a recorder, a digital certificate writer, etc.) stores data in the IC tag 41. The recording apparatus 3 is used in manufacturing processing of the ink ribbon 4. The ink ribbon 4 is formed by incorporating the IC tag 41 in which the data is stored by the recording apparatus 3. The data stored in the IC tag 41 by the recording apparatus 3 includes a digital certificate certifying that the data is a genuine product, and ribbon length information that indicates a length of the ribbon contained in the ink ribbon 4 (e.g., consumable amount information that indicates an amount of consumable (e.g., ribbon, toner, ink) contained in the consumable item). Details of the digital certificate will be described later.

The image forming apparatus 5 accommodates the ink ribbon 4 and performs printing based on the accommodated ink ribbon 4. The image forming apparatus 5 communicates with the IC tag 41 included in the accommodated ink ribbon 4 to verify the digital certificate. Details of the verification will be described later. The image forming apparatus 5 performs printing when the digital certificate is correct, and does not perform printing when the digital certificate is not correct.

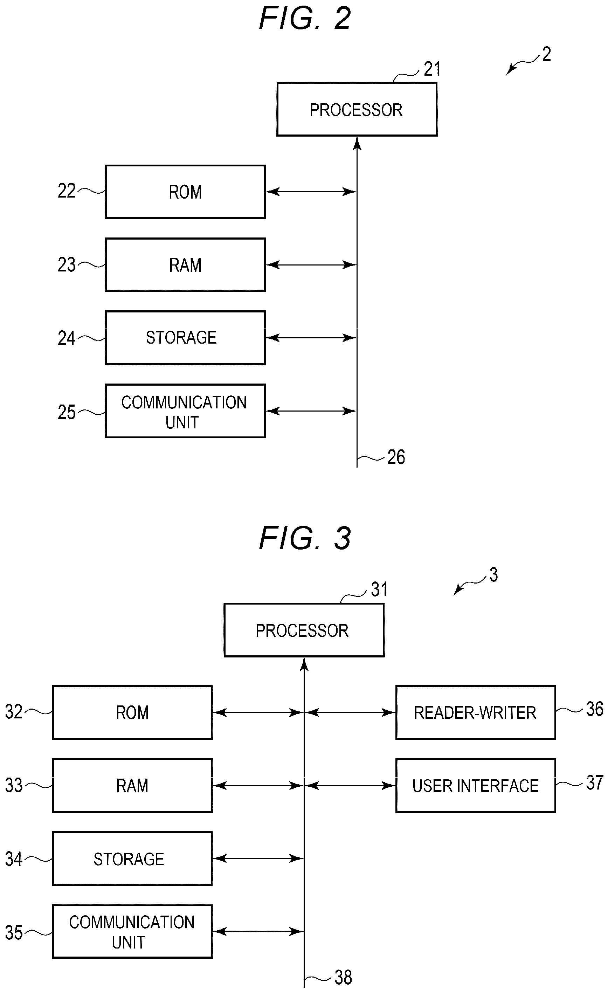

FIG. 2 is a block diagram showing a configuration example of a server according to the first embodiment. The server 2 includes a processor 21, a read only memory (ROM) 22, a random access memory (RAM) 23, a storage 24 (e.g., a memory), a communication unit 25 (e.g., a communication interface), and a system bus 26. The system bus 26 includes an address bus, a data bus, a control signal line, and the like. The system bus 26 connects the processor 21, the ROM 22, the RAM 23, the storage 24, and the communication unit 25 to one another. A computer of the server 2 (e.g., controller) is formed by connecting the processor 21, the ROM 22, the RAM 23, and the storage 24 via the system bus 26.

The processor 21 corresponds to a central part of the above-described computer. The processor 21 controls units to implement various functions as the server 2 according to an operating system or an application program. The processor 21 is, for example, a central processing unit (CPU).

The ROM 22 is a non-volatile storage device. The ROM 22 stores an operating system set in advance, an application program, control data, and the like.

The RAM 23 is a volatile storage device. The RAM 23 is also used as a work area where data is appropriately rewritten by the processor 21. The RAM 23 is also used as a buffer memory for temporarily storing data.

The storage 24 corresponds to an auxiliary storage portion of the above computer. The storage 24 stores data used by the processor 21 when performing various kinds of processing, data created by the processing in the processor 21, and the like. The storage 24 may store the above-described application program. The storage 24 is, for example, an electric erasable programmable read only memory (EEPROM) (registered trademark), a hard disk drive (HDD), a solid state drive (SSD), or the like.

The communication unit 25 communicates with an outside of the server 2 (e.g., with external devices).

FIG. 3 is a block diagram showing a configuration example of the recording apparatus according to the first embodiment. The recording apparatus 3 includes a processor 31, a ROM 32, a RAM 33, a storage 34 (e.g., a memory), a communication unit 35 (e.g., a communication interface), a reader-writer 36 (e.g., a reader, a writer, a scanner, a sensor, etc.), a user interface 37, and a system bus 38. The system bus 38 includes an address bus, a data bus, a control signal line, and the like. The system bus 38 connects the processor 31, the ROM 32, the RAM 33, the storage 34, the communication unit 35, the reader-writer 36, and the user interface 37 to one another. A computer of the recording apparatus 3 (e.g., a controller) is formed by connecting the processor 31, the ROM 32, the RAM 33, and the storage 34 via a system bus 38.

The processor 31 corresponds to a central part of the above-described computer. The processor 31 controls units to implement various functions of the recording apparatus 3 according to operating systems or application programs. The processor 31 is, for example, a CPU.

The ROM 32 is a non-volatile storage device. The ROM 32 stores an operating system set in advance, an application program, control data, and the like.

The RAM 33 is a volatile storage device. The RAM 33 is also used as a work area where data is appropriately rewritten by the processor 31. The RAM 33 is also used as a buffer memory for temporarily storing data.

The storage 34 corresponds to an auxiliary storage portion of the above-described computer. The storage 34 stores data used by the processor 31 when performing various kinds of processing, data created by the processing in the processor 31, and the like. The storage 34 may store the above-described application program. The storage 34 is, for example, an EEPROM (registered trademark), an HDD, an SSD, or the like.

The communication unit 35 communicates with an outside of the recording apparatus 3.

The reader-writer 36 communicates with the IC tag 41 outside the recording apparatus 3. The reader-writer 36 can read data from the IC tag 41 and write data to the IC tag 41 (including deletion of data).

The user interface 37 is, for example, a touch panel (e.g., a touch screen). The user interface 37 notifies a user who operates the recording apparatus 3 of various kinds of information and receives an input from the user.

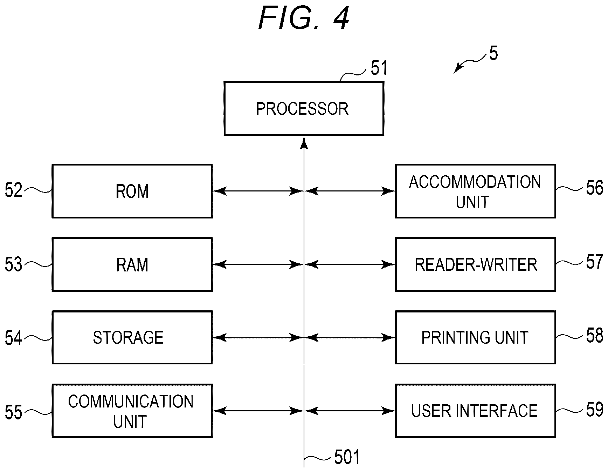

FIG. 4 is a block diagram showing a configuration example of the image forming apparatus according to the first embodiment. The image forming apparatus 5 includes a processor 51, a ROM 52, a RAM 53, a storage 54 (e.g., a memory), a communication unit 55 (e.g., a communication interface), an accommodation unit 56, a reader-writer 57 (e.g., a reader, a writer, a scanner, a sensor, etc.), a printing unit 58 (e.g., a printer), a user interface 59, and a system bus 501. The system bus 501 includes an address bus, a data bus, a control signal line, and the like. The system bus 501 connects the processor 51, the ROM 52, the RAM 53, the storage 54, the communication unit 55, the accommodation unit 56, the reader-writer 57, the printing unit 58, and the user interface 59 to one another. A computer of the image forming apparatus 5 (e.g., a controller) is formed by connecting the processor 51, the ROM 52, the RAM 53, and the storage 54 via the system bus 501.

The processor 51 corresponds to a central part of the above-described computer. The processor 51 controls units to implement various functions as the image forming apparatus 5 according to an operating system or an application program. The processor 51 is, for example, a CPU.

The ROM 52 is a non-volatile storage device. The ROM 52 stores an operating system set in advance, an application program, control data, and the like.

The RAM 53 is a volatile storage device. The RAM 53 is also used as a work area where data is appropriately rewritten by the processor 51. The RAM 53 is also used as a buffer memory for temporarily storing data.

The storage 54 corresponds to an auxiliary storage portion of the above computer. The storage 54 stores data used by the processor 51 when performing various kinds of processing, data created by the processing in the processor 51, and the like. The storage 54 may store the above-described application program. The storage 54 is, for example, an EEPROM (registered trademark), an HDD, or an SSD. The storage 54 stores a cumulative ribbon usage amount associated with the unique ID (e.g., a cumulative usage amount). The cumulative ribbon usage amount is information indicating how much the ribbon of the ink ribbon 4 is used (e.g., how much of the consumable contained in the consumable item is used). The cumulative ribbon usage amount is stored in association with the unique ID.

The application program stored in the ROM 52 or the storage 54 includes a processing program described related to information processing executed by the image forming apparatus 5. The method for installing the processing program in the ROM 52 or the storage 54 is not particularly limited. The processing program can be installed in the ROM 52 or the storage 54 by being recorded on a removable recording medium or being distributed by communication via a network. The recording medium may be in any form as long as the program can be recorded and is readable by a device, such as a CD-ROM or a memory card.

The communication unit 55 communicates with an outside of the image forming apparatus 5.

The accommodation unit 56 accommodates the ink ribbon 4.

The reader-writer 57 communicates with the IC tag 41 included in the ink ribbon 4 accommodated in the accommodation unit 56. The reader-writer 57 can read data from the IC tag 41 and write data to the IC tag 41 (including deletion of data).

The printing unit 58 performs printing to form an image using the ink ribbon 4 accommodated in the accommodation unit 56.

The user interface 59 is, for example, a touch panel (e.g., a touch screen). The user interface 59 notifies a user who operates the image forming apparatus 5 of various types of information and receives an input from the user.

### Operations

Operations of the units of the printing system 1 will be described. In the printing system 1, encryption and decryption are performed using a secret key and a public key. A pair of the secret key and the public key is generated in the server 2. The secret key is transmitted from the server 2 to the recording apparatus 3 and stored in the storage 34 of the recording apparatus 3. The public key is transmitted from the server 2 to the image forming apparatus 5 and stored in the storage 54 of the image forming apparatus 5. Hereinafter, it is assumed that the secret key is stored in the storage 34 of the recording apparatus 3 and the public key is stored in the storage 54 of the image forming apparatus 5.

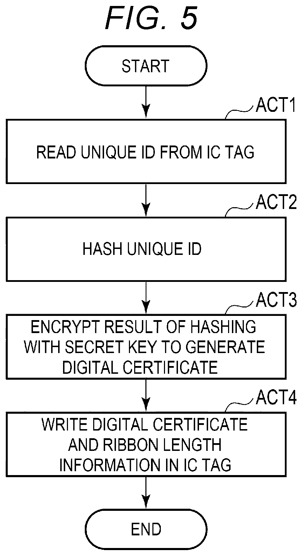

The operation of the recording apparatus 3 in the manufacturing processing of the ink ribbon 4 will be described. FIG. 5 is a flowchart showing an example of the recording processing of the recording apparatus according to the first embodiment. The recording processing is processing of recording the digital certificate in the IC tag 41 incorporated in the ink ribbon 4.

When the recording processing is started (start), the processor 31 of the recording apparatus 3 reads the unique ID from the IC tag 41 (ACT 1). Specifically, the processor 31 controls the reader-writer 36 to read the unique ID from the IC tag 41.

The processor 31 hashes the unique ID (ACT 2). Specifically, the processor 31 hashes the unique ID using a certain hash function.

The processor 31 encrypts a result of the hashing with the secret key to generate the digital certificate (ACT 3). Specifically, the processor 31 encrypts the result of the hashing executed in ACT 2 using the secret key stored in the storage 34 to create the digital certificate.

The processor 31 writes the digital certificate and the ribbon length information in the IC tag 41 (ACT 4). Specifically, the processor 31 controls the reader-writer 36 to write the digital certificate created in ACT 3 and the ribbon length information corresponding to the ink ribbon 4 into which the IC tag 41 is incorporated into the IC tag 41. Then, the series of processing shown in FIG. 5 ends (end).

In this way, the digital certificate based on the unique ID is written to the IC tag 41. Thereafter, the IC tag 41 to which the digital certificate is written is incorporated into the ink ribbon 4.

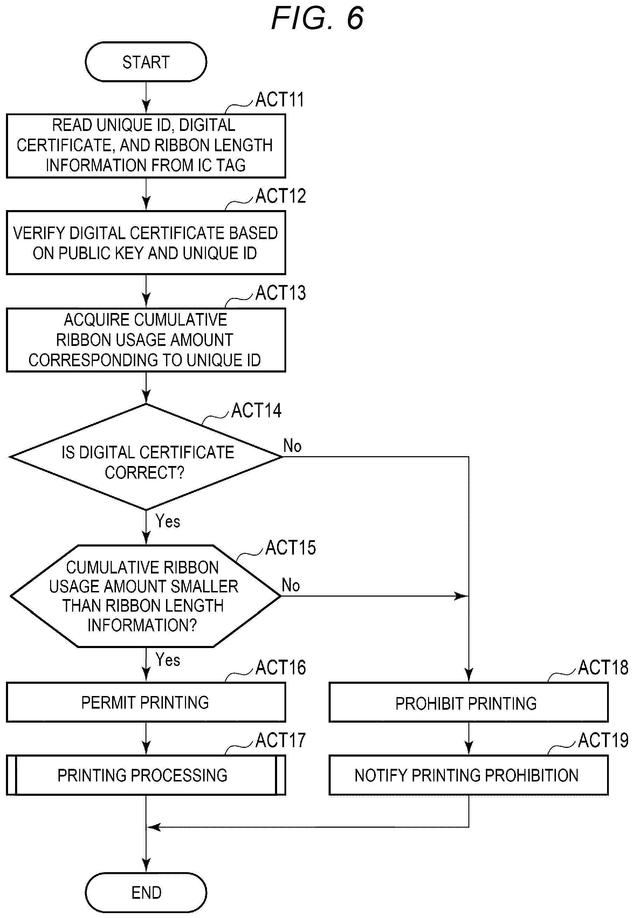

Next, the operation of the image forming apparatus 5 accommodating the ink ribbon 4 will be described. FIG. 6 is a flowchart showing an example of an operation of the image forming apparatus according to the first embodiment.

When a power supply is turned on and the image forming apparatus 5 starts operation (start), the processor 51 of the image forming apparatus reads the unique ID, the digital certificate, and the ribbon length information from the IC tag 41 (ACT 11). Specifically, the processor 51 controls the reader-writer 57 to read the unique ID, the digital certificate, and the ribbon length information from the IC tag 41 of the ink ribbon 4 accommodated in the accommodation unit 56.

The processor 51 verifies the digital certificate based on the public key and the unique ID (ACT 12). Specifically, the processor 51 decrypts the digital certificate read in ACT 11 using the public key stored in the storage 54. Further, the processor 51 hashes the unique ID read in ACT 11 using the same hash function as that of ACT 2 described with reference to FIG. 5. Then, the processor 51 checks whether a result of decrypting the digital certificate matches a result of hashing the unique ID.

The processor 51 acquires the cumulative ribbon usage amount corresponding to the unique ID (ACT 13). Specifically, the processor 51 reads the cumulative ribbon usage amount corresponding to the unique ID read in ACT 11 from a plurality of cumulative ribbon usage amounts stored in the storage 54. For example, if the cumulative ribbon usage amount corresponding to the unique ID is not stored in the storage 54, the processor 51 regards the unused ink ribbon 4 as being accommodated, and sets the cumulative ribbon usage amount corresponding to the unique ID to "0".

The processor 51 determines whether the digital certificate is correct (ACT 14). Specifically, if the result of decrypting the digital certificate matches the result of hashing the unique ID, the processor 51 determines that the digital certificate is correct (Yes in ACT 14) (e.g., the digital certificate is valid), and determines whether the cumulative ribbon usage amount is smaller than the ribbon length information (ACT 15). If the cumulative ribbon usage amount is smaller than the ribbon length information (Yes in ACT 15), the processor 51 permits the printing (ACT 16). If the printing is permitted, the processor 51 executes the printing processing (ACT 17). Details of the printing processing will be described later.

On the other hand, if the result of decrypting the digital certificate does not match the result of hashing the unique ID, the processor 51 determines that the digital certificate is not correct (No in ACT 14) (e.g., the digital certificate is incorrect or invalid), and prohibits the printing (ACT 18). If the cumulative ribbon usage amount is not smaller than the ribbon length information (No in ACT 15), the processor 51 prohibits the printing (ACT 18). Specifically, the processor 51 prohibits the operation of the printing unit 58. When the printing is prohibited, the processor 51 notifies printing prohibition (ACT 19). Specifically, the processor 51 controls the user interface 59 to notify the user that the printing is prohibited.

If the processing of ACT 17 or ACT 19 is completed, the series of processing shown in FIG. 6 ends (end).

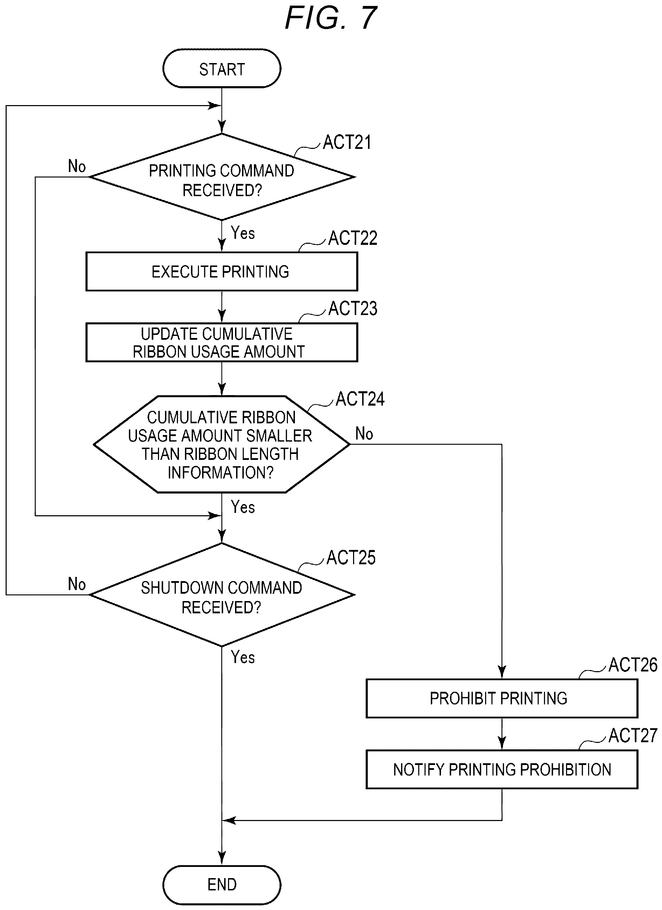

The printing processing of the image forming apparatus 5 will be described in detail. FIG. 7 is a flowchart showing an example of the printing processing of the image forming apparatus according to the first embodiment. If the printing processing is started (start), the processor 51 of the image forming apparatus 5 determines whether a printing command is received (ACT 21). Specifically, the processor 51 determines whether the printing command is received via, for example, the communication unit 55 or the user interface 59. If the printing command is received (Yes in ACT 21), the processor 51 executes the printing (ACT 22). Specifically, the processor 51 controls the printing unit 58 to execute the printing.

If the execution of the printing is completed, the processor 51 updates the cumulative ribbon usage amount (ACT 23). Specifically, the processor 51 increases and overwrites the cumulative ribbon usage amount stored in the storage 54 based on a content of the printing executed in ACT 22.

If the update of the cumulative ribbon usage amount is completed, the processor 51 determines whether the cumulative ribbon usage amount is smaller than the ribbon length information (ACT 24). If the cumulative ribbon usage amount is smaller than the ribbon length information (Yes in ACT 24) and if the printing command is not received in ACT 21 (No in ACT 21), the processor 51 determines whether a shutdown command is received (ACT 25). If the shutdown command is not received (No in ACT 25), the processor 51 executes ACT 21.

In ACT 24, if the cumulative ribbon usage amount is not smaller than the ribbon length information (No in ACT 24), the processor 51 prohibits the printing (ACT 26). Specifically, the processor 51 prohibits the operation of the printing unit 58. If the printing is prohibited, the processor 51 notifies the printing prohibition (ACT 27). Specifically, the processor 51 controls the user interface 59 to notify the user that the printing is prohibited.

In ACT 25, if the shutdown command is received (Yes in ACT 25), and if the processing of ACT 27 is completed, the series of processing shown in FIG. 7 ends (end).

### Effects

As described above, according to the first embodiment, the recording apparatus 3 stores the unique ID and the digital certificate based on the unique ID in the ink ribbon 4 as the genuine product in the printing system 1. In the printing system 1, the image forming apparatus 5 verifies whether the digital certificate of the ink ribbon 4 is based on the unique ID. Accordingly, the image forming apparatus 5 can determine whether the ink ribbon 4 accommodated in the accommodation unit 56 is a genuine product.

Specifically, the digital certificate stored in the ink ribbon 4 as the genuine product is information obtained by encrypting information generated based on the unique ID unique to one IC tag 41 with the secret key. Therefore, a manufacturer of a non-genuine product having no secret key cannot generate a correct digital certificate. Also, when the digital certificate is copied from the IC tag 41 of the ink ribbon 4 as the genuine product and copied to the IC tag 41 of the ink ribbon 4 as the non-genuine product, the digital certificate is not correct since the unique ID of the IC tag 41 is different. As a result, the image forming apparatus 5 according to the embodiment can achieve high security as compared with a case in which certain information is encrypted and used as information indicating the genuine product.

According to the first embodiment, the image forming apparatus 5 stores the cumulative ribbon usage amount of the ink ribbon 4 in the storage 54 in association with the unique ID. If the cumulative ribbon usage amount is not smaller than the ribbon length information, that is, if the cumulative ribbon usage amount is equal to or greater than the ribbon length information, the image forming apparatus 5 prohibits the printing. Accordingly, the image forming apparatus 5 according to the first embodiment can prevent the ink ribbon 4 corresponding to one unique ID from consuming a ribbon having a length equal to or longer than the ribbon length information. For example, it is conceivable to remove the IC tag 41 from the ink ribbon 4 of the used genuine product and divert to the ink ribbon as the non-genuine product. However, in the image forming apparatus 5 according to the first embodiment, the cumulative ribbon usage amount is stored in the storage 54 in association with the unique ID. Therefore, the image forming apparatus 5 according to the first embodiment is capable of preventing the use of non-genuine products by permitting the printing up to the original ribbon length of the genuine product and prohibiting the printing thereafter, even if the non-genuine ink ribbon includes the IC tag 41 that is diverted from the used genuine product.

### Second Embodiment

The printing system 1 according to a second embodiment will be described. The printing system 1 according to the second embodiment differs from the printing system 1 according to the first embodiment in that the cumulative ribbon usage amount is stored in the storage 24 of the server 2 and is not stored in the storage 54 of the image forming apparatus 5. Hereinafter, differences of the printing system 1 according to the second embodiment from the first embodiment will be described.

### Configuration

In the printing system 1 according to the second embodiment, the cumulative ribbon usage amount is stored in the storage 24 of the server 2 in association with the unique ID. The cumulative ribbon usage amount is not stored in the storage 54 of the image forming apparatus 5. Other configurations of the printing system 1 according to the second embodiment are the same as those of the printing system 1 according to the first embodiment.

### Operations

Operations of the printing system 1 according to the second embodiment will be described. In the printing system 1 according to the second embodiment, the operation of the recording apparatus 3 is the same as that of the first embodiment. The printing system 1 according to the second embodiment is different from the first embodiment in that the server 2 and the image forming apparatus 5 exchange the cumulative ribbon usage amount.

The operation of the image forming apparatus 5 according to the second embodiment is common to the operation of the image forming apparatus 5 according to the first embodiment described with reference to FIGS. 6 and 7. Details of the operations in ACT 13 and ACT 23 are different.

In ACT 13, the processor 51 of the image forming apparatus 5 acquires the cumulative ribbon usage amount corresponding to the unique ID (ACT 13). Specifically, the processor 51 controls the communication unit 55 to transmit the unique ID to the server 2 to request the cumulative ribbon usage amount. The processor 21 of the server 2 receives the unique ID from the image forming apparatus 5, reads the cumulative ribbon usage amount associated with the unique ID from the storage 24, and transmits the cumulative ribbon usage amount to the image forming apparatus 5. The image forming apparatus 5 receives the cumulative ribbon usage amount from the server 2. The processor 51 of the image forming apparatus 5 stores the received cumulative ribbon usage amount in the RAM 53, for example. For example, if the cumulative ribbon usage amount corresponding to the unique ID is not stored in the storage 24, the processor 21 of the server 2 regards the unused ink ribbon 4 as being inquired, and sets the cumulative ribbon usage amount corresponding to the unique ID to "0".

In ACT 23, the processor 51 of the image forming apparatus 5 updates the cumulative ribbon usage amount (ACT 23). Specifically, the processor 51 increases and overwrites the cumulative ribbon usage amount stored in the RAM 53 based on the content of the printing executed in ACT 22. Further, the processor 51 controls the communication unit 55 to transmit the overwritten cumulative ribbon usage amount and the unique ID to the server 2. The processor 21 of the server 2 receives the cumulative ribbon usage amount and the unique ID, and updates the cumulative ribbon usage amount associated with the unique ID stored in the storage 24 to the received cumulative ribbon usage amount.

Other operations are the same as those operations of the image forming apparatus 5 according to the first embodiment described with reference to FIGS. 6 and 7.

### Effects

As described above, according to the second embodiment, the use of the non-genuine product can be prevented as in the first embodiment. According to the second embodiment, the cumulative ribbon usage amount is associated with the unique ID and stored in the storage 24 of the server 2. Accordingly, when a plurality of image forming apparatuses 5 are included in the printing system 1, even if the IC tag 41 of the ink ribbon 4 used in a certain image forming apparatus 5 is read by another image forming apparatus 5, the cumulative ribbon usage amount can be taken into consideration, and the use of the non-genuine product can be prevented.

### Third Embodiment

The printing system 1 according to a third embodiment will be described. The printing system 1 according to the third embodiment differs from the printing system 1 according to the first embodiment in that the cumulative ribbon usage amount is stored in the IC tag 41 of the ink ribbon 4 and is not stored in the storage 54 of the image forming apparatus 5. Hereinafter, differences of the printing system 1 according to the third embodiment from the first embodiment will be described.

### Configuration

In the printing system 1 according to the third embodiment, the cumulative ribbon usage amount is stored in the IC tag 41 of the ink ribbon 4 accommodated in the image forming apparatus 5. The cumulative ribbon usage amount is not stored in the storage 54 of the image forming apparatus 5. Other configurations of the printing system 1 according to the third embodiment are the same as those of the printing system 1 according to the first embodiment.

### Operations

Operations of the printing system 1 according to the third embodiment will be described. In the printing system 1 according to the third embodiment, the operation of the recording apparatus 3 is the same as that of the first embodiment. The printing system 1 according to the third embodiment is different from the first embodiment in that the image forming apparatus 5 exchanges the cumulative ribbon usage amount with the IC tag 41 of the ink ribbon 4.

The operation of the image forming apparatus 5 according to the third embodiment is common to the operation of the image forming apparatus 5 according to the first embodiment described with reference to FIGS. 6 and 7. Details of the operations in ACT 13 and ACT 23 are different.

In ACT 13, the processor 51 of the image forming apparatus 5 acquires the cumulative ribbon usage amount corresponding to the unique ID (ACT 13). Specifically, the processor 51 controls the reader-writer 57 to read the cumulative ribbon usage amount from the IC tag 41. The processor 51 stores the read cumulative ribbon usage amount in, for example, the RAM 53. For example, if the cumulative ribbon usage amount is not stored in the IC tag 41, the processor 51 regards that the unused ink ribbon 4 is detected, and sets the cumulative ribbon usage amount to "0".

In ACT 23, the processor 51 updates the cumulative ribbon usage amount (ACT 23). Specifically, the processor 51 increases and overwrites the cumulative ribbon usage amount stored in the RAM 53 based on the content of the printing executed in ACT 22. Further, the processor 51 controls the reader-writer 57 to store the overwritten cumulative ribbon usage amount in the IC tag 41. When storing the cumulative ribbon usage amount in the IC tag 41, the processor 51 may encrypt the cumulative ribbon usage amount.

Other operations are the same as those operations of the image forming apparatus 5 according to the first embodiment described with reference to FIGS. 6 and 7.

### Effects

As described above, according to the third embodiment, the use of the non-genuine product can be prevented as in the first embodiment. According to the third embodiment, the cumulative ribbon usage amount is stored in the IC tag 41 of the ink ribbon 4. Accordingly, when a plurality of image forming apparatuses are included in the printing system 1, even if the IC tag 41 of the ink ribbon 4 used in a certain image forming apparatus 5 is read by another image forming apparatus 5, the cumulative ribbon usage amount can be taken into consideration, and the use of the non-genuine product can be prevented.

### Other Modifications

In the above embodiments, the case in which the processor 51 of the image forming apparatus 5 manages the cumulative ribbon usage amount is described as an example. For example, a remaining ribbon amount of may be managed. Specifically, for example, when the processor 51 of the image forming apparatus 5 detects an unused ink ribbon, the processor 51 may set the ribbon length information as an initial value of the remaining ribbon amount, subtract the remaining ribbon amount each time the printing is performed, and manage the amount by prohibiting the printing when the remaining ribbon amount falls below 0.

In the above-described embodiments, an example in the case in which the image forming apparatus 5 performs the printing based on the ink ribbon 4 including the IC tag 41 is described. For example, the image forming apparatus 5 may perform the printing based on another type of consumable item including the IC tag 41, and may perform the printing based on an ink cartridge including the IC tag 41 or a toner cartridge including the IC tag 41.

While certain embodiments of the invention have been described, the embodiments have been presented by way of example only and is not intended to limit the scope of the invention. These novel embodiments can be implemented in various other forms, and various omissions, substitutions, and modifications can be made without departing from the scope of the disclosure. The embodiments and the modifications thereof are included in the scope of the disclosure, and are included in the scope of the disclosure disclosed in the claims.

## Claims

1. An image forming apparatus (5) comprising:
a reader (57) configured to read, from a tag (41) of a consumable item, a unique identifier, a digital certificate, and consumable amount information indicating an amount of a consumable contained in the consumable item; and
a controller configured to:
verify the digital certificate based on the unique identifier;
determine a cumulative usage amount of the consumable item corresponding to the unique identifier; and
prohibit printing in response to a determination that at least one of (a) the digital certificate is verified to be incorrect or (b) the cumulative usage amount is equal to or greater than the amount of the consumable contained in the consumable item.

2. The image forming apparatus of claim 1, wherein the consumable item is at least one of an ink ribbon containing a ribbon, a toner cartridge containing toner, or an ink cartridge containing ink.

3. The image forming apparatus of any one of claim 1 or 2, wherein the controller is configured to prohibit the printing in response to a determination that the digital certificate is verified to be incorrect.

4. The image forming apparatus of any one of claims 1 to 3, further comprising a printer configured to form an image using the consumable item, wherein the controller is configured to prohibit use of the printer in response to the determination that at least one of (a) the digital certificate is verified to be incorrect or (b) the cumulative usage amount is equal to or greater than the amount of the consumable contained in the consumable item.

5. The image forming apparatus of any one of claims 1 to 4, wherein the consumable item is an ink ribbon, and the consumable amount information is ribbon length information indicating a length of a ribbon.

6. The image forming apparatus of claim 5, wherein the controller is configured to prohibit the printing in response to a determination that the cumulative ribbon usage amount is equal to or greater than the ribbon length information.

7. The image forming apparatus of claim 5 or 6, further comprising:
a memory configured to store the cumulative ribbon usage amount in association with the unique identifier,
wherein the controller is configured to acquire the cumulative ribbon usage amount from the memory.

8. The image forming apparatus of any one of claims 5 to 7, further comprising:
a communication interface configured to communicate with a server,
wherein the controller is configured to:
transmit the unique identifier to the server through the communication interface; and
receive the cumulative ribbon usage amount from the server through the communication interface.

9. The image forming apparatus of any one of claims 5 to 8, wherein the controller is configured to acquire the cumulative ribbon usage amount from the tag.

10. The image forming apparatus of any one of claims 1 to 9, wherein the controller is configured to verify the digital certificate by comparing (a) information obtained by hashing the unique identifier with (b) information obtained by decrypting the digital certificate.

11. The image forming apparatus of any one of claims 1 to 8, wherein the tag is an integrated circuit tag, and wherein the reader is configured to communicate wirelessly with the integrated circuit tag to read the unique identifier.

12. The image forming apparatus of any one of claims 1 to 9, wherein the digital certificate is based on the unique identifier.

13. The image forming apparatus of any one of claims 5 to 10, wherein the cumulative ribbon usage amount of the ink ribbon corresponding to the unique identifier includes a usage amount of the ink ribbon in a second image forming apparatus.

14. A method of authenticating an ink ribbon of an image forming apparatus, the method comprising:
controlling a sensor to read an integrated circuit tag of the ink ribbon and retrieve a unique identifier, a digital certificate, and ribbon length information indicating a length of a ribbon;
verifying the digital certificate based on the unique identifier;
determining a cumulative ribbon usage amount of the ink ribbon corresponding to the unique identifier; and
prohibiting printing in response to at least one of (a) a determination that the digital certificate is verified to be incorrect or (b) a determination that the cumulative ribbon usage amount is equal to or greater than the ribbon length information.

15. The method of claim 14, wherein determining the cumulative ribbon usage amount of the ink ribbon corresponding to the unique identifier includes receiving the cumulative ribbon usage amount from at least one of (a) a server or (b) the integrated circuit tag.
